# EUROPEAN PATENT SPECIFICATION

(11) **EP 4 181 117 B1**
(45) Date of publication and mention of the grant of the patent: **02.07.2025**
(21) Application number: 22207283.7
(22) Date of filing: 14.11.2022
(51) Int. Cl.: G10K 11/34, H04S 7/00, H04M 1/68

(54) **SYSTEM FOR INCREASING THE PRIVACY OF TELEPHONE CONVERSATIONS CARRIED OUT ONBOARD OF MOTOR VEHICLES, AND MOTOR VEHICLE COMPRISING SUCH A SYSTEM**
SYSTEM ZUR ERHÖHUNG DER PRIVATSPHÄRE VON TELEFONGESPRÄCHEN AN BORD VON KRAFTFAHRZEUGEN UND KRAFTFAHRZEUG MIT EINEM SOLCHEN SYSTEM
SYSTÈME POUR AUGMENTER LA CONFIDENTIALITÉ DES CONVERSATIONS TÉLÉPHONIQUES RÉALISÉES À BORD DE VÉHICULES AUTOMOBILES, ET VÉHICULE AUTOMOBILE COMPRENANT UN TEL SYSTÈME

(30) Priority: 15.11.2021 IT 202100028931
(43) Date of publication of application: 17.05.2023
(73) Proprietor: Ask Industries Societa' per Azioni, 60037 Monte San Vito (AN) (IT)
(72) Inventor: BIANCHI, Alberto, 42123 REGGIO EMILIA (IT); TRIPODI, Carlo, 43123 PARMA (IT); COSTALUNGA, Alessandro, 46019 VIADANA (IT); STROZZI, Nicolò, 42020 QUATTRO CASTELLA (IT)
(74) Representative: De Santis, Giovanni

(56) References cited:
- CN-A- 107 972 594
- DE-A1- 102018 202 593
- US-A1- 2018 167 725

## Description

The present invention relates to a system for increasing the privacy of telephone conversations carried out onboard of motor vehicles, and to a motor vehicle comprising such a system.

The system according to the present invention is especially suitable for use in automobiles and will be described hereinafter with reference to such an application without intending in any way to limit its possible areas of application to other types of motor vehicles having a passenger compartment designed to accommodate people, such as buses, trucks, et cetera, which may be engaged in telephone communications while being onboard of the motor vehicle.

As is well known, the development of the so-called mobile telephony and the now widely used cellular telephones makes it possible to conduct telephone communications almost anywhere and at any time.

One of the areas where this potential has been found to be useful and exploited is certainly in the field of motor vehicle transportation.

Unfortunately, at least at an early stage, the use of such devices in vehicles on the move, particularly by drivers, brought significant safety problems and forced authorities to promulgate increasingly stringent regulations aimed at preventing drivers from holding cell phones conversing on the phone while driving their vehicles.

In order to meet these regulations and still allow the potential of mobile communication to be exploited even while driving, as is well known, solutions have been developed that nowadays make it possible to make phone calls by interfacing directly with the audio system installed in vehicles. In fact, such a system operationally links with the cell phone, which no longer has to be held by the driver, and acts as a transmission bridge with the remote user at the other end of the communication.

While such solutions have certainly made a significant contribution in terms of safety, they also entail some drawbacks, particularly in terms of privacy.

In fact, a communication received by the on board system, for example of a car, is radiated not only inside the passenger compartment but unfortunately also outside it, at least up to a certain distance.

In fact, it is not uncommon for people on the street to be able to distinctly hear what is being said during an on-board telephone conversation in a nearby motor vehicle, which is clearly detrimental to privacy.

US 2018/167725 A1 discloses a method for providing phone calls in a vehicle which includes: providing first sound signal in which phone call sound is beam formed to be audible only to a first occupant, by controlling a first directional speaker, when phone call request for the first occupant in the vehicle is received; and providing second sound signal different from the first sound signal which is beam formed to be audible to a second occupant, by controlling a second directional speaker, while the first phone call sound is provided.

CN 107972594 A discloses a recognizing method and device based on audio devices of multiple positions of a car. The recognizing method comprises the steps that the answering request of a terminal device in a called state is received; corresponding user information is obtained according to the information, carried in the answering request, of the terminal device; according to the user information, passengers matched with the user information are found out in the passengers who sit on the different positions of the car; and the audio devices of the positions where the found-out passengers are located are started to answer the call of the terminal device.

DE 102018202593 A1 discloses a method for setting playback of a sound recording in a room, the playback providing for a sound signal from a sound source arranged centrally in a virtual sound stage of the sound recording. The sound is output in the room by means of several loudspeakers in a spot area with predetermined sound properties, the sound properties being set by means of respective playback parameters for the loudspeakers.

Therefore, the main aim of the present is to propose a solution to at least partially overcome the above-mentioned inconveniences, and in particular to increase as much as possible the privacy of telephone conversations conducted in a motor vehicle.

This main aim, as well as any further purposes that will emerge more from the description below, are achieved by a system for increasing the privacy of telephone conversations carried out in motor vehicles, the characteristics of which are defined in claim 1.

This main purpose, as well as any additional purposes that will emerge more from the following description, are also achieved by a motor vehicle comprising said system, as defined in claim 6.

Particular embodiments form the subject matter of the dependent claims, the contents of which are intended to form an integral part of this description.

Further features and advantages of the invention will appear from the following detailed description, made purely by way of non-limiting example, with reference to the attached drawings, in which:
figure 1 is a block diagram schematically illustrating a possible embodiment of a system according to the present invention;
figure 2 is a perspective view schematically illustrating a portion of an automobile in which the system of figure 1 is installed;
figure 3 is a plan view schematically illustrating an automobile in which a system according to the invention is installed according to a possible example of configuration.

It should be noted that in the following detailed description, identical or similar components, from a structural and/or functional point of view, may have the same or different reference numbers, regardless of whether they are shown in different embodiments of the present invention or in separate parts.

It should also be noted that in order to clearly and concisely describe the present invention, the drawings may not necessarily be to scale and some features of the description may be shown in a somewhat schematic form.

Furthermore, when the term "adapted," or "arranged," or "configured," or "shaped," or "set," or a similar term is possibly used herein, referring to any component as a whole, or to any part of a component or to a combination of components, it should be understood to mean and correspondingly includes the structure and/or the configuration and/or the shape and/or the positioning.

In particular, when such terms refer to electronic hardware or software media, they are to be understood as including circuits or parts of electronic circuits, as well as software/firmware, such as algorithms, routines and programs in general, running and/or residing in any storage medium.

In addition, when the terms "transverse" or "transversely" are used herein they are to be understood as including a direction that is not parallel to the reference part(s)/direction(s)/axis(s) to which they refer, and perpendicularity is to be considered a specific case of transverse direction.

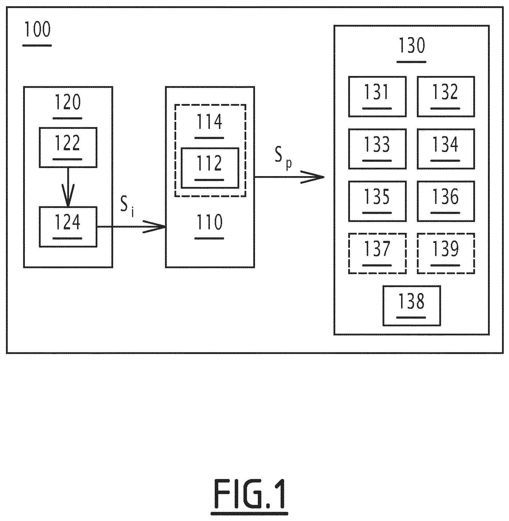

Figure 1 schematically illustrates a possible embodiment of a system 100 to increase the privacy of telephone conversations conducted onboard a motor vehicle.

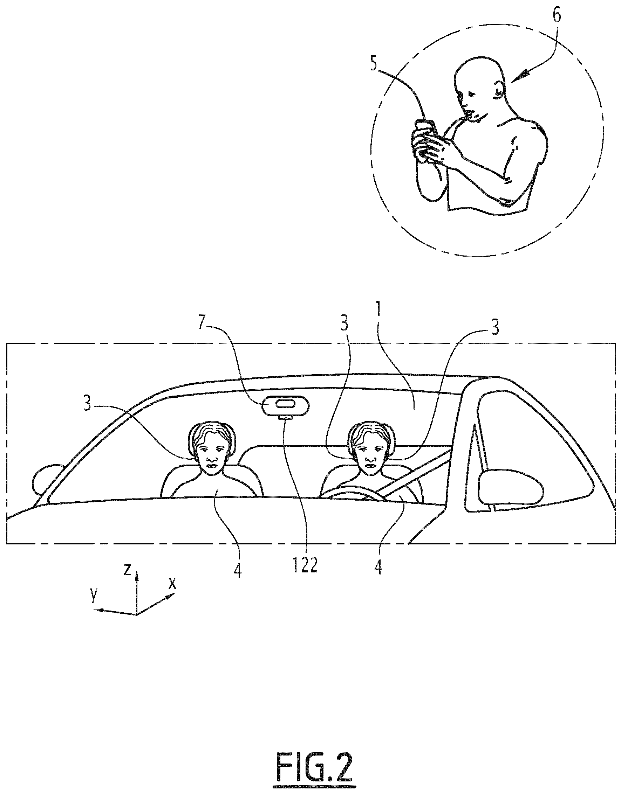

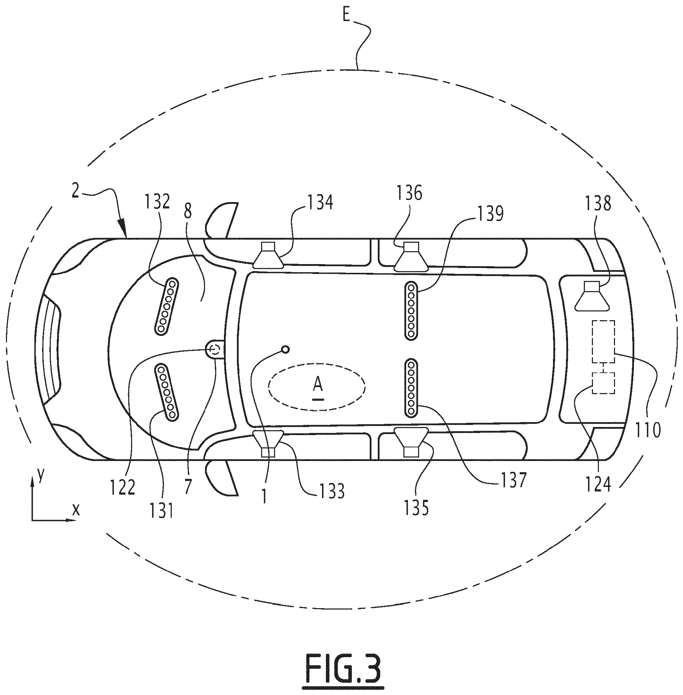

An example of a vehicle in the form of an automobile 2 is illustrated in Figures 2 and 3; in particular, Figure 2 shows an example in which two persons 4 are seated in the front seats inside the passenger compartment 1 and between them, the person 4 seated in the position of the driver is involved in a telephone conversation.

In the following description of the system 100 according to the invention, for the sake of descriptive simplicity, reference will therefore be made primarily to such a person or individual sitting in the driver's position involved in a telephone conversation, but what is described is equally valid and applicable for any number of individuals 4 present on board, whatever position each of them occupies in the passenger compartment 1, such as on the front seat next to the driver's position, or even at the rear, and whoever may be involved in a telephone conversation with an outside party.

As illustrated in Figure 1, the system 100 according to the invention includes at least:
- an electronic control unit 110 suitable to be mounted onboard of the vehicle 2;
- a plurality of sound sources 130, which are suitable to be mounted onboard of the vehicle 2 at predetermined positions and suitable for emitting sound waves within the passenger compartment 1.

In a possible embodiment of the system 100 according to the invention, the plurality of sound sources 130 comprises at least one array of loudspeakers.

In a possible embodiment of the system 100 according to the invention, the plurality of sound sources 130 includes at least one vibrating acoustic device, commonly referred to in the art as a shaker or acoustic exciter.

Clearly, it is possible to realize the system 100 according to the invention using both one or more loudspeakers and one or more vibrating acoustic devices.

Specifically, in the realization example in Figure 3, two loudspeaker arrays 131 and 132 are shown, both of which are installed, for example, at the dashboard 8 of the car 2.

Depending on the application, each of these arrays can be realized using a variable number of loudspeakers.

In one possible embodiment, each array 131, 132 preferably includes at least three loudspeakers.

In the example configuration shown in Figure 3, there are provided further four side loudspeakers 133 and 134, 135 and 136 installed along the sides of the car 2, such as at the front and rear doors, and an additional loudspeaker 138 located at the rear.

In addition, as depicted schematically in Figures 1 and 3, additional sound sources 130 can be used, e.g., two additional loudspeaker arrays 137 and 139 at the area between the front seats and the rear seats.

Usefully, in a possible embodiment of the system 100 according to the invention, one or more sound sources, whether loudspeakers or vibrating acoustic devices, can be installed at the seats, preferably in the headrests.

Such sources may consist of loudspeakers and vibrating acoustic devices of known types and, according to various application requirements, are configured and operatively associated with each other in such a way as to meet on the whole the coverage requirements of the various frequency ranges of the audio range, thus acting, for example, as woofers, subwoofers et cetera.

Usefully, in the system 100 according to the invention, when a telephone conversation is initiated on board the motor vehicle 2 with a remote interlocutor external to the motor vehicle 2, the electronic control unit 110 is configured, for example on the basis of a signal received in input indicative of the initiation of a telephone conversation with a remote interlocutor external to the motor vehicle 2, so as to:
- select, from the plurality of sound sources installed on board, one or more sources 130 specifically chosen to radiate within the motor vehicle 2 sound waves transmitting what is communicated by the remote interlocutor 6 during the telephone conversation; and
- drive the chosen one or more sound sources 130 so that the sound waves emitted by them during the telephone conversation and transmitting what is communicated by the remote user 6 are directed to at least a desired listening position A inside the passenger compartment 1 of the motor vehicle 2.

In Figure 2, the remote user is schematically represented by the reference number 6 and is illustrated as using a portable telephone 5; such a user 6 could be in any location, such as in another passenger car, equipped with a system 100 according to the invention, or with a common system of a known type, in a building, et cetera.

In one possible example not forming part of the claimed invention, the electronic control unit 110 includes at least a first set of predefined equalizers digital filters 112.

According to the claimed invention, the electronic control unit 110 is configured to generate in real-time said at least one first set of equalizers digital filters 112.

In particular, in a possible illustrative example of the system 100, the first set of digital filters 112 is predefined or, according to the claimed invention, the electronic control unit 110 is configured to generate it in real time based on at least a predefined acoustic model M of the passenger compartment 1 of the motor vehicle 2 or a part thereof.

The acoustic model M allows having, among other things, an acoustic map of the interior of the passenger compartment 1 including also the information of the introduced acoustic reverberations thus enabling the a priori knowledge of parameters such as, for example, the time of flight of the sound waves from the various sound sources to the reception points selected as references.

Such a predefined acoustic model M is, for example, saved in a memory unit 114 included in the electronic control unit 110, as illustrated in the example in Figure 1, or in a memory associated with it, and can be realized according to modeling techniques and realization solutions widely known in engineering and acoustics that can be easily implemented by a person skilled in the art and are therefore not described in detail here.

Usefully, according to one possible illustrative example, the first set of digital filters 112 is predefined or, according to the claimed invention, is generated in real time by the electronic control unit 110 on the basis of the emissive characteristics of the one or more chosen sound sources 130, in particular their emission frequency range, and their position within the cabin 2.

In a further possible illustrative example, the first set of digital filters 112 is predefined or, according to the claimed invention, is generated in real time by the electronic control unit 110 on the basis of a predefined acoustic model of an area of predetermined extent outside the passenger compartment 1 in the vicinity of the motor vehicle 2.

In Figure 3 such an area is delimited schematically by the dashed line E around car 2, and may extend for example a distance of a few meters, e.g., a radius of 2m to 10m with respect to the virtual center of the car body.

For example, such an area is mapped in advance, when the vehicle is stationary, by installing around it in the predetermined area E, one or more microphones and measuring the impulse responses at low and low-medium frequencies, for example varying between 100 and 2000 Hz, using for the mapping appropriate mathematical models and modeling techniques widely known in engineering and acoustics easily implementable by a person skilled in the art, and for this reason not described herein in detail.

Such an acoustic model of the external area E can also be stored in the memory unit 114 included in the electronic control unit 110, or in an associated memory.

Preferably, in the system 100 according to the invention, each set of filters 112, whether prefixed or generated in real time, is defined on the basis of and as a function of both the acoustic models of the passenger compartment 1 M and the exterior area E, as well as parameters indicative of the emissive characteristics of the sound sources 130 and their location within the passenger compartment 1.

In practice, on the basis of these elements, the electronic control unit 110 is configured to drive the appropriately chosen one or more sound sources 130 by applying to them the predefined or real-time generated set of equalizers digital filters 112 so that the sound waves emitted by them and transmitting what is communicated by the remote external user 6 during the telephone conversation are selectively directed to the at least one desired listening position A.

In a possible embodiment, the at least one desired listening position A is a predetermined position.

For example, such a position could coincide with a predefined standard position, or with the assumed position of the ears 3 of the person usually driving the car 2.

Alternatively, think for example of a family-use automobile, in the system 100 according to the invention it is possible to have a plurality of predefined positions, e.g. each corresponding to a different user of the same motor vehicle 2.

Such predefined positions can be stored in the same memory 114 of the electronic unit 110, e.g., together with the usual settings that store the position of the seat of the driver or passenger on duty (height of the seat base, inclination of the backrest, headrest, et cetera), e.g., for each possible driver or passenger of the motor vehicle in question.

In this case, the electronic control unit 110 may comprise a plurality of predefined sets of digital filters 112, each for a different individual, or it may generate them in real time, and the selection of a predefined set or the real-time calculation of the same may be operated by means of a selector switch or selection function activated by the user of the moment.

In a further possible embodiment, the system 100 according to the invention further comprises a tracking system 120 which is configured to provide the electronic control unit 110 with a signal Sᵢ indicative of the current position of the ears 3 of an individual 4 within the passenger compartment 1 relative to a predetermined reference listening position within the passenger compartment 1 itself.

In accordance with this embodiment, the electronic control unit 110 is further configured to generate in real time, on the basis of said signal Sᵢ received in input, as well as on the bases of one or more, preferably all, said predefined acoustic patterns of the passenger compartment and exterior area E, and said emissive characteristics and position of the sound sources 130, at least one further set of equalizers digital filters 112 different from said first set of predefined or real-time generated digital filters.

In particular, said at least one further set of digital filters 112 is applied by the electronic control unit 110 to the one or more selected sound sources 130 so that they emit sound waves transmitting what is communicated by the remote user 6 directed selectively toward the current position of the ears 3 of the individual 4 inside the passenger compartment 1.

Clearly, in such embodiment, the first set of digital filters 112 generated in real time by the electronic control unit can also be eventually determined as a function of the signal Sᵢ.

In practice, the electronic control unit 110 is configured to drive one or more of the sound sources 130 by means of a corresponding drive signal Sₚ so as to achieve routing of the emitted sound waves to the current listening position, i.e., the ears 3 of the tracked individual 4, relative to a predetermined initial reference position.

In one possible embodiment, the electronic control unit 110 is configured to generate said at least one additional set of digital equalizers filters 112 by modifying one or more spectral characteristics of one or more filters of the at least one first set of digital filters predefined or as initially computed in real time by the electronic control unit 110.

In practice, the electronic control unit 110 is configured for this purpose to operate in the frequency or time domain according to appropriate and per se known engineering processing techniques, and, according to one possible embodiment, the electronic control unit 110 modifies the phase and gain of the frequency response of one or more filters of the first set predefined or as initially generated in real time.

Depending on the magnitude of the movement of the head of the individual 4 and thus of the position of his/her ears 3, the modification can take place over the entire band of action of the filter or over a portion of it; for example, unit 110 modifies phase and gain of high frequencies only if the head has moved a few cm from the reference position, and/or it can modify phase and gain of low frequencies if there is a greater displacement.

As previously mentioned, the 120 tracking system is configured to provide a Si signal indicative directly of the current position of the ears 3 of each individual 4 tracked, referring it relative to at least one predetermined fixed reference position, which may be appropriately chosen within the passenger compartment 1.

In particular, according to a possible embodiment, the system 100 comprises a 3D mapping of the passenger compartment 1, such mapping being, for example, also saved in the memory 114 included in the electronic control unit 110, or in a memory associated therewith.

According to a possible embodiment, the tracking system 120 is configured to provide a signal Sᵢ indicative of the current position of the ears 3 of the individual 4 at least in a virtual plane defined by a first reference axis X extending along the front-back direction of the vehicle 2 and a second axis Y, transverse to the first axis X and directed along the junction of the two side flanks of the vehicle 2, schematically represented in Figures 2 and 3.

According to a further embodiment, the tracking system 120 is configured to provide a signal Si indicative of the current spatial position of the ears 3 of individual 4 in passenger compartment 1.

In practice, in this embodiment, the current position of the ears 3 is defined three-dimensionally, and thus each signal Si generated by the tracking system 120 includes, in addition to the data about the computed coordinates related to the current position of the ears 3 along the previously mentioned X- and Y-axes, also information about the computed coordinates related to the current position of the ears 3 along a third Z-axis transversal to the X- and Y-axes and directed along the floor-to-roof junction of the car 2, as schematically depicted in Figure 2.

According to one possible embodiment, the tracking system 120 includes:
- at least one camera 122 configured to capture one or more images of at least part of the head of the individual 4 traced inside the passenger compartment 1; and
- a processing unit 124 configured to generate said signal Sᵢ indicative of the current position of the ears 3 of the tracked individual according to the one or more images captured by the camera 122.

In the exemplary embodiment of Figure 2, there is shown a single camera 122 installed, for example, at the rearview mirror 7 of the automobile 2.

Clearly, in the system 100 according to the invention, it is possible to install such a camera at another location, or to use multiple cameras, for example, a first camera 122 intended to capture images related to the heads of persons seated in the front seats, and a second camera 122 positioned to capture images of the heads of people seated in the rear seats, or it is also possible to use multiple cameras 122 each associated with a corresponding seat of the automobile 2.

In one possible embodiment, the tracking system 120 includes at least one stereoscopic camera 122.

The processing unit 124 can be located at a camera 122, e.g., integrated with it, or it can be remotely arranged at an appropriate location, e.g., at the rear of the automobile 2 where the electronic control unit 110 can also be installed, as shown schematically in Figure 3.

In addition, it is possible to use a single processing unit 124 that can simultaneously process coordinates relating to the current position of the ears 3 of each individual 4 tracked present in the passenger compartment 1, providing corresponding signals Sᵢ to the electronic control unit 110.

Alternatively, multiple processing units 124 each associated with one or more cameras 122 can be used.

Conveniently, according to one possible embodiment of the system 100 according to the invention, the tracking system 120 includes at least one camera 122 configured to simultaneously capture images of the heads of two persons 4 aboard a vehicle 2, and a processing unit 124 that receives such images, providing the electronic control unit 110 with corresponding Sᵢ signals relative to the current position of the respective ears 3 of both persons tracked 4. Accordingly, the electronic control unit 110 generates the corresponding filters or sets of digital filters suitable for allowing sound waves to be emitted by the sound sources 130 conveyed in a calibrated manner to one of the respective two calculated current positions.

Depending on the specific person who is carrying out the conversation on board the motor vehicle 2, switching between one or more sets of filters relating to, for example, the driver 4 or the set(s) relating to a passenger seated, for example, in the seat next to the driver, can be done by means of a selector switch in the system 100 itself, which allows switching between the two positions, with the electronic unit 110 selectively identifying, on a case-by-case basis, the sources to be driven and using or generating in real time the digital filters to be applied.

It has been found in practice that the system 100 according to the invention achieves the intended aim since it allows, during a telephone conversation, to select appropriately the sound source(s) to be operated, and to drive them by directing the sound waves of received communications to a desired location, whether fixed or variable, significantly reducing acoustic leakage outside the passenger compartment compared to current solutions.

With further advantage, the system 100 according to the invention can be used in principle in any type of vehicle with a passenger compartment intended to be occupied by people, and can be easily installed both in new vehicles and, if desired, in vehicles already on the road. Thus, a further object of the present invention relates to a vehicle 2 characterized by comprising at least one system 100 as described above, and more particularly defined in the appended claims.

Of course, without prejudice to the principle of the invention, the embodiments and realizing details may be widely varied from what has been described and illustrated purely by way of preferred but not limiting examples, without thereby departing from the scope of protection of the present invention as defined by the appended claims. The shape and/or positioning of the described components or parts thereof may be suitably modified as long as it is compatible with the purpose and functionality for which such components were designed within the scope of the present invention. For example, the electronic unit 110 and the processing unit 124 may be made as separate parts and positioned remotely from each other, or they may be integrated into a single device, et cetera. The control unit 110 may consist of, or comprise, any processor-based device or similar device suitable for the purpose, e.g., a commercially available type of processor, suitably programmed and provided to the necessary extent with circuitry and electronic components, in order to perform the innovative functionality devised for the system 100. Similarly, the processing unit 124 may also consist of, or include, any processor-based device or similar device suitable for the purpose, configured to appropriately process the received video data. The sound sources 130 may be different in number and/or differently positioned from the implementation example shown above; where used, the tracking system 120 may include other types of video cameras, et cetera. The scope of the present invention is defined by the appended claims.

## Claims

1. A system (100) for increasing the privacy of telephone conversations carried out on board of a motor vehicle (2), comprising at least:
- an electronic control unit (110) suitable to be mounted on board of the motor vehicle;
- a plurality of sound sources (130) suitable to be mounted on board the motor vehicle (2) in predefined positions and suitable for emitting sound waves inside the passenger compartment (1);
wherein, when onboard the motor vehicle a telephone conversation is initiated with a remote interlocutor (6) external to the motor vehicle (2), said electronic control unit (110) is configured to:
- select, from said plurality of sound sources, one or more sound sources (130) chosen to emit, inside the passenger compartment (1), sound waves transmitting what is communicated by the remote interlocutor (6) during the telephone conversation; and
- drive the one or more sources (130) selected so that the sound waves emitted by them and transmitting what is communicated by the remote interlocutor (6) during the telephone conversation are directed towards at least one desired listening position (A) within the passenger compartment (1) of the motor vehicle (2);
the system (100) being **characterized in that** said electronic control unit (110) is configured to generate in real time at least a first set of digital filters (112), said first set of digital filters being generated in real time based on:
- a predefined acoustic model (M) of the passenger compartment (1) of the motor vehicle (2) or a part thereof; and
- the emissive characteristics of the one or more sound sources (130) chosen and their position within the passenger compartment (2); and
- a predefined acoustic pattern of a predetermined extension area (E) outside the passenger compartment (1) of the motor vehicle (2),
wherein the electronic control unit (110) is configured to drive the appropriately selected one or more sound sources (130) by applying to them the real-time generated first set of digital filters (112) so that the sound waves emitted by them and transmitting what is communicated by the remote interlocutor (6) during the telephone conversation are selectively directed towards the at least one desired listening position (A).

2. System (100) according to claim 1, further comprising a tracking system (120) configured to provide the electronic control unit (110) with a signal (Si) indicative of the current position of the ears (3), of an individual (4) within the passenger compartment (1) having the telephone conversation, relative to a predetermined reference listening position within the passenger compartment (1) itself.

3. System (100) according to claim 2, wherein said electronic control unit (110) is further configured to generate in real time, based on said signal (Si) received in input and said predefined acoustic model (M) of the passenger compartment (1), predefined acoustic model of a predetermined extension area (E) outside the passenger compartment (1) of the motor vehicle (2), and the emissive characteristics of the one or more chosen sound sources (130) and their position within the passenger compartment (2), at least one further set of digital filters (112) different from said first set of digital filters, said at least one further set of digital filters (112) being suitable for allowing emission by the one or more chosen sound sources (130) of sound waves transmitting what is communicated by the remote interlocutor (6) directed towards the current position of the ears (3) of the individual (4) having the telephone conversation within the passenger compartment (1).

4. System (100) according to the preceding claim, wherein said electronic control unit (110) is configured to generate said at least one further set of digital filters (112) by modifying one or more spectral characteristics of one or more filters of the at least one first set of digital filters.

5. System (100) according to any one of claims 2 to 4, wherein said tracking system (120) comprises:
- at least one camera (122) configured to capture one or more images of at least a portion of the head of the individual (4) having the telephone conversation within the passenger compartment (1); and
- a processing unit (124) configured to generate said signal (Si) indicative of the current position of the ears (3) of the individual (4) having the telephone conversation within the passenger compartment (1) based on the one or more images captured by the camera (122).

6. Motor vehicle (2) **characterized in that** it comprises a system (100) according to one or more of the preceding claims.

## Patentansprüche

1. System (100) zum Erhöhung der Privatheit von Telefongesprächen, die an Bord eines Kraftfahrzeugs (2) geführt werden, umfassend:
- eine elektronische Steuereinheit (110), die geeignet ist, um an Bord des Kraftfahrzeugs montiert zu werden;
- eine Vielzahl von Schallquellen (130), die geeignet sind, um an vordefinierten Positionen an Bord des Kraftfahrzeugs (2) montiert zu werden und geeignet sind, um Schallwellen in den Fahrgastraum (1) auszusenden;
wobei, wenn an Bord des Kraftfahrzeugs ein Telefongespräch mit einem entfernten Gesprächspartner (6) außerhalb des Kraftfahrzeugs (2) eingeleitet wird, die elektronische Steuereinheit (110) zu Folgendem konfiguriert ist:
- Auswählen, aus der Vielzahl von Schallquellen, einer oder mehrerer Schallquellen (130), die gewählt sind, um in dem Fahrgastraum (1) Schallwellen zu emittieren, die das übertragen, was der entfernte Gesprächspartner (6) während des Telefongesprächs übermittelt; und
- Ansteuern der einen oder der mehreren ausgewählten Quellen (130), sodass die davon emittierten Schallwellen, die das übertragen, was der entfernte Gesprächspartner (6) während des Telefongesprächs übermittelt, auf mindestens eine gewünschte Hörposition (A) innerhalb des Fahrgastraums (1) des Kraftfahrzeugs (2) gerichtet werden;
wobei das System (100) **dadurch gekennzeichnet ist, dass** die elektronische Steuereinheit (110) konfiguriert ist, um in Echtzeit mindestens einen ersten Satz von digitalen Filtern (112) zu erzeugen, wobei der erste Satz von digitalen Filtern in Echtzeit basierend auf Folgendem erzeugt wird:
- einem vordefinierten akustischen Modell (M) des Fahrgastraums (1) des Kraftfahrzeugs (2) oder eines Teils davon; und
- den emissiven Charakteristiken der einen oder der mehreren ausgewählten Schallquellen (130) und deren Position innerhalb des Fahrgastraums (2); und
- einem vordefinierten akustischen Muster eines vorbestimmten Erweiterungsbereichs (E) außerhalb des Fahrgastraums (1) des Kraftfahrzeugs (2),
wobei die elektronische Steuereinheit (110) konfiguriert ist, um die entsprechend ausgewählte eine oder ausgewählten mehreren Schallquellen (130) anzusteuern, indem sie darauf den in Echtzeit erzeugten ersten Satz digitaler Filter (112) anwendet, sodass die davon emittierten Schallwellen, die das übertragen, was von dem entfernten Gesprächspartner (6) während des Telefongesprächs übermittelt wird, selektiv auf die mindestens eine gewünschte Hörposition (A) gerichtet werden.

2. System (100) nach Anspruch 1, ferner umfassend ein Verfolgungssystem (120), das konfiguriert ist, um der elektronischen Steuereinheit (110) ein Signal (Si) bereitstellt, das indikativ für die aktuelle Position der Ohren (3) einer Person (4) innerhalb des Fahrgastraums (1), die das Telefongespräch führt, in Bezug auf eine vorbestimmte Referenzhörposition innerhalb des Fahrgastraums (1) an sich ist.

3. System (100) nach Anspruch 2, wobei die elektronische Steuereinheit (110) ferner konfiguriert ist, um in Echtzeit basierend auf dem am Eingang empfangenen Signals (Si) und dem vordefinierten akustischen Modell (M) des Fahrgastraums (1), einem vordefinierten akustischen Modell eines vorbestimmten Erweiterungsbereichs (E) außerhalb des Fahrgastraums (1) des Kraftfahrzeugs (2) und den emissiven Charakteristiken der einen oder der mehreren ausgewählten Schallquellen (130) und ihrer Position innerhalb des Fahrgastraums (2) mindestens eine weitere Gruppe von digitalen Filtern (112) zu erzeugen, die sich von der ersten Gruppe von digitalen Filtern unterscheidet, wobei die mindestens eine weitere Gruppe von digitalen Filtern (112) geeignet ist, um eine Emission von Schallwellen durch die eine oder die mehreren ausgewählten Schallquellen (130), die das übertragen, was von dem entfernten Gesprächspartner (6) übermittelt wird, gerichtet auf die aktuelle Position der Ohren (3) der Person (4), die das Telefongespräch innerhalb des Fahrgastraums (1) führt, zu ermöglichen.

4. System (100) nach dem vorherigen Anspruch, wobei die elektronische Steuereinheit (110) konfiguriert ist, um den mindestens einen weiteren Satz digitaler Filter (112) zu erzeugen, indem sie eine oder mehrere spektrale Eigenschaften eines oder mehrerer Filter des mindestens einen ersten Satzes digitaler Filter modifiziert.

5. System (100) nach einem der Ansprüche 2 bis 4, wobei das Verfolgungssystem (120) Folgendes umfasst:
- mindestens eine Kamera (122), die konfiguriert ist, um ein oder mehrere Bilder von mindestens einem Teil des Kopfs der Person (4), die das Telefongespräch innerhalb des Fahrgastraums (1) führt, aufzunehmen; und
- eine Verarbeitungseinheit (124), die konfiguriert ist, um das Signal (Si), das indikativ für die aktuelle Position der Ohren (3) der Person (4) ist, die das Telefongespräch innerhalb des Fahrgastraums (1) führt, basierend auf dem einen oder den mehreren Bildern, die von der Kamera (122) aufgenommen werden, zu erzeugen.

6. Kraftfahrzeug (2), **dadurch gekennzeichnet, dass** es ein System (100) nach einem oder mehreren der vorherigen Ansprüche umfasst.

## Revendications

1. Système (100) permettant d'accroître la confidentialité des conversations téléphoniques menées à bord d'un véhicule automobile (2), comprenant au moins :
- une unité de commande électronique (110) pouvant être montée à bord du véhicule automobile ;
- une pluralité de sources sonores (130) pouvant être montées à bord du véhicule automobile (2) dans des positions prédéfinies et pouvant émettre des ondes sonores à l'intérieur de l'habitacle (1) ;
dans lequel, lorsqu'une conversation téléphonique est engagée à bord du véhicule automobile avec un interlocuteur distant (6) extérieur au véhicule automobile (2), ladite unité de commande électronique (110) est configurée pour :
- sélectionner, dans ladite pluralité de sources sonores, une ou plusieurs sources sonores (130) choisies pour émettre, à l'intérieur de l'habitacle (1), des ondes sonores transmettant les informations communiquées par l'interlocuteur à distance (6) pendant la conversation téléphonique ; et
- contrôler la ou les sources (130) sélectionnées de façon que les ondes sonores qu'elles émettent et qui transmettent les informations communiquées par l'interlocuteur à distance (6) au cours de la conversation téléphonique soient dirigées vers au moins une position d'écoute souhaitée (A) à l'intérieur de l'habitacle (1) du véhicule automobile (2)
le système (100) étant **caractérisé en ce que** ladite unité de commande électronique (110) est configurée pour générer en temps réel au moins un premier ensemble de filtres numériques (112), ledit premier ensemble de filtres numériques étant généré en temps réel sur la base de :
- un modèle acoustique prédéfini (M) de l'habitacle (1) du véhicule automobile (2) ou d'une partie de celui-ci ; et
- les caractéristiques émissives de la ou des sources sonores (130) choisies et leur position dans l'habitacle (2) ; et
- un modèle acoustique prédéfini d'une zone d'extension prédéterminée (E) à l'extérieur de l'habitacle (1) du véhicule automobile (2), dans lequel l'unité de commande électronique (110) étant configurée pour contrôler une ou plusieurs sources sonores (130) sélectionnées de manière appropriée en leur appliquant le premier ensemble de filtres numériques (112) généré en temps réel, de sorte que les ondes sonores qu'elles émettent et qui transmettent les informations communiqués par l'interlocuteur distant (6) au cours de la conversation téléphonique soient sélectivement dirigées vers au moins une position d'écoute souhaitée (A).

2. Système (100) selon la revendication 1, comprenant en outre un système de suivi (120) configuré pour fournir à l'unité de commande électronique (110) un signal (Si) indiquant la position réelle des oreilles (3) d'un individu (4) à l'intérieur de l'habitacle (1) tenant la conversation téléphonique, par rapport à une position d'écoute de référence prédéterminée à l'intérieur de l'habitacle (1) lui-même.

3. Système (100) selon la revendication 2, dans lequel ladite unité de commande électronique (110) est en outre configurée pour générer en temps réel, sur la base dudit signal (Si) reçu en entrée et dudit modèle acoustique prédéfini (M) de l'habitacle (1), le modèle acoustique prédéfini d'une zone d'extension prédéterminée (E) à l'extérieur de l'habitacle (1) du véhicule automobile (2), et les caractéristiques émissives de la ou des sources sonores choisies (130) et leur position au sein de l'habitacle (2), au moins un autre ensemble de filtres numériques(112) différent dudit premier ensemble de filtres numériques, ledit au moins un autre ensemble de filtres numériques (112) étant approprié pour permettre l'émission par la ou les sources sonores choisies (130) d'ondes sonores transmettant les informations communiquées par l'interlocuteur distant (6) en direction de la position réelle des oreilles (3) de l'individu (4) ayant une conversation téléphonique dans l'habitacle (1).

4. Système (100) selon la revendication précédente, dans lequel ladite unité de commande électronique (110) est configurée pour générer ledit au moins un autre ensemble de filtres numériques (112) en modifiant une ou plusieurs caractéristiques du spectre d'un ou plusieurs filtres de l'au moins un premier ensemble de filtres numériques.

5. Système (100) selon l'une quelconque des revendications 2 à 4, dans lequel ledit système de suivi (120) comprend :
- au moins une caméra (122) configurée pour capturer une ou plusieurs images d'au moins une partie de la tête de la personne (4) tenant la conversation téléphonique dans l'habitacle (1) ; et
- une unité de traitement (124) configurée pour générer ledit signal (Si) indiquant la position réelle des oreilles (3) de l'individu (4) tenant la conversation téléphonique dans l'habitacle (1) sur la base d'une ou de plusieurs images capturées par la caméra (122).

6. Véhicule automobile (2) **caractérisé en ce qu'**il comprend un système (100) selon une ou plusieurs des revendications précédentes.
